(19) Europäisches Patentamt
European Patent Office
Office européen des brevets

(11) **EP 3 696 080 B1**

(12) **EUROPEAN PATENT SPECIFICATION**

(45) Date of publication and mention
of the grant of the patent:
**23.02.2022 Bulletin 2022/08**

(21) Application number: **20156826.8**

(22) Date of filing: **12.02.2020**

(51) International Patent Classification (IPC):
**B64B 1/64** *(2006.01)*      **F16L 37/32** *(2006.01)*
**B64B 1/52** *(2006.01)*      B64B 1/62 *(2006.01)*
F16L 37/096 *(2006.01)*      F16L 37/62 *(2006.01)*

(52) Cooperative Patent Classification (CPC):
**F16L 37/096; B64B 1/52; B64B 1/64; F16L 37/32;
F16L 37/62;** B64B 1/62

(54) **TETHERED HELIUM KITE GAS REPLENISHMENT DEVICE AND GAS REPLENISHMENT METHOD**

GERÄT ZUM AUFFÜLLEN EINES ANGEBUNDENEN HELIUM BALLONS MIT GAS UND METHODE ZUM AUFFÜLLEN MIT GAS

APPAREIL POUR AVITAILLER UN AÉROSTAT AMARRÉ AVEC DE L'HÉLIUM ET MÉTHODE POUR AVITAILLER AVEC DU GAZ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.02.2019 PL 42895619**

(43) Date of publication of application:
**19.08.2020 Bulletin 2020/34**

(73) Proprietor: **Instytut Podstawowych Problemów
Polskiej Akademil
Nauk
02-106 Warsaw (PL)**

(72) Inventors:
• **Knap, Lech**
  **00-415 Warszawa (PL)**
• **Wolejsza, Zbigniew**
  **02-760 Warszawa (PL)**
• **Graczykowski, Cezary**
  **01-756 Warsaw (PL)**
• **Faraj, Rami**
  **02-603 Warsaw (PL)**
• **Holnicki-Szulc, Jan**
  **02-502 Warsaw (PL)**

(74) Representative: **Grzelak, Anna
Sigeon IP, sp z o. o.
ul. Raclawicka 146 p. II
02-117 Warszawa (PL)**

(56) References cited:
US-A- 4 998 560          US-A1- 2012 312 919
US-A1- 2017 328 164

## Description

The subject of the invention is a device for gas losses replenishment in a tethered helium kite and gas replenishment method.

The main technological challenge for helium aerostats (e.g. in the form of a tethered heli-kite) is the need to replenish gas losses caused by helium leakages.

The state of the art reveals equipment to replenish gas loss in a tethered helium kite/aerostat.

US2017203827 discloses an aerostat disassembly and maintenance device including the tethered aerostat; a ground based aerostatic gas retention tank; a detachable fixing pipe assembly to which the ground based aerostatic gas filling tank can be connected; a hollow tie attached at one end to the detachable fixing pipe assembly and attached at the other end to the tethered aerostat; a fixing spool between the gas replenishment tank placed on the ground and the aerostat; and an interceptor bracket placed on the fixing spool to hold the detachable fixing pipe assembly. The device also includes an aerostat mooring boom. Preferably, the hollow mounting tie contains a plurality of gas supply pipes, with at least one of the plurality of the gas supply pipes supplying the lifting gas and at least one of the plurality of the gas supply pipes supplying gas different than the lifting gas. The detachable fixing pipe assembly, as disclosed in the document, is preferably placed in a housing connected to the aerostat gas replenishment tank on the ground, where the said housing and detachable fixing pipe assembly contain a plurality of separate, sealed compartments for the supply of lifting and non-lifting gases.

On the other hand, US2012312919 discloses a tethered airship gas replenishment system comprising an upper airship; the first end of the tether attached to the upper airship; and a ballooned shuttle configured to move up the tether towards the upper airship carrying a lifting gas load. Preferably, the lifting gas pressure in the shuttle is higher than the lifting gas pressure in the upper airship, and the transfer of at least a part of the gas by the shuttle is caused by a pressure difference. Whereas, preferably, the shuttle contains a reinforced pipe passing through the shuttle, a reinforced pipe configured to take up the tether and allow the tether to pass through the pipe when the shuttle is moving along the tether. The said system is preferably attached to a fixed anchorage point on the ground or a mobile anchoring platform. Preferably the system also comprises a bottom airship attached to the other end of the tether, containing the source of lifting gas carried by the shuttle. Preferably the system also contains a docking device connected to the upper airship, the upper shell of the shuttle containing a matching connector configured for connection to the docking device and transferring the lifting gas to the docking device; preferably there also is a lower docking device connected to the lower airship.

The purpose of the invention was to develop a method of automatically replenishing the gas in a tethered kite with a multi-purpose capsule through a docking connector.

The subject of the invention is a tethered helium kite gas-replenishment device according to claim 1, consisting of a multi-purpose gas replenishment capsule equipped with a clamp, a guiding element and a shock-absorbing device, characterized in that the capsule is mobile; the tethered helium kite gas replenishment device further comprises a docking connector consisting of a socket-type end adapted to be mounted on a kite and a plug-type end mounted on the capsule or vice versa and the plug-type end comprised an actuator for moving the wedge ring, Whereas the socket-type end is made of a body, a closing poppet and a pressuring spring. Preferably, the body is equipped with a flange, allowing the lever to be pressed down. Whereas the plug-type end is provided with a wedge ring and consists of a housing equipped with a pivotally mounted lever, configured to press against the housing by a movement of the wedge ring, and a plug end poppet supported by a second spring. Wherein the plug end poppet has an undercut which, in combination with a channel made in the plug end housing, forms a sliding shut-off valve controlling a gas supply to the actuator.

The actuator is preferably a pneumatic actuator or a linear actuator with an electric drive powered from a battery configured to be mounted in the gas replenishment capsule or the kite.

The invention also relates to the method of replenishing gas losses in a tethered helium kite according to claim 3, by means of a tethered helium kite replenishment device according to the invention, comprising the step of providing the tethered helium kite replenishment device such that, when a capsule is docked, a socket-type end mounted on a kite and a plug-type end mounted on the capsule or vice versa are connected; which causes a closing poppet to move along with a pressuring spring into a socket-type end body and the movement of a plug end poppet together with a second spring into a housing of the plug-type end, and the plug end poppet contains a pin having the undercut of the plug end poppet, which in turn causes the deflection and compression of the springs in their respective ends, accompanied by the movement of the pin of the plug-type end poppet, which causes the undercut of the plug end poppet pin to overlap with the a channel of the housing of the plug-type end and allows gas to flow under pressure through a shut-off valve to a actuator comprising a chamber and a piston rod, and consequently the movement of a wedge ring of the plug end, which in turn causes a lever mounted pivotally on the housing to press against the socket-type end body; when the pressure in the chamber of the actuator drops to a desired value, when supplied with gas under pressure the actuator moves the piston rod out, which moves wedge ring and tightens the lever, mounted pivotally on the housing, the piston rod of the actuator is thus returned until the plug end lever is loosened, which causes the connector disconnection due to the action of the previously compressed spring of the socket-type end and the second spring of the plug-type end, whereas when disconnecting, the socket-type end closing poppet and the plug-type end plug end poppet close both ends of the docking connector tightly. Preferably, the plug-type end is sealed with a seal embedded in the housing when connected to the socket-type end.

Preferably, the kite's tank volume change and the pressure change in the tank of the gas replenishment capsule is caused by changing a length of the clamp which length is variable and adjustable located on the circumference of the capsule.

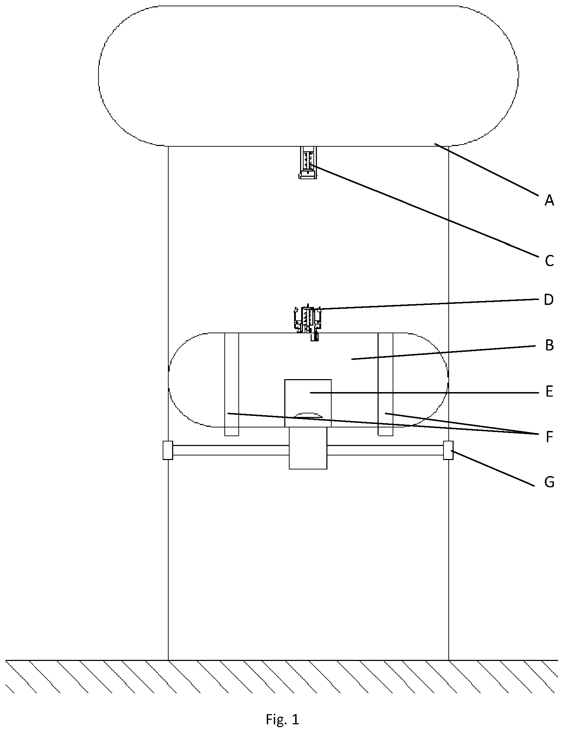

The invention is shown in examples of embodiment and in the figure where Fig. 1 shows an aerostat or a helium kite A equipped with a socket-type end of docking connector C and capsule B for gas replenishment in a helium kite equipped with a plug-type end D of the docking connector, Fig. 2 shows an example of the design of the C socket-type end and D plug-type end of the docking connector, Fig. 3 shows the docking connector in the disconnected position, Fig. 4 shows the clamp F of variable length with microelectric linear actuators on the circumference, Fig. 5 shows the guiding system G to ensure that the capsule can move up and down the tether/lines.

The guiding element consist of either a guiding system G or a propulsion system. In the absence of a guiding system G, the kite - to which the capsule supplies the gas - is equipped with a propulsion system that allows the aerostat to be positioned directly above the capsule so that the ends of the docking connector are connected when the capsule moves up. Guiding can be performed through the use of an image analysis device, a system equipped with GPS, radio transmitters/receivers or a system using laser transmitters and receivers (e.g. LIDAR 360).

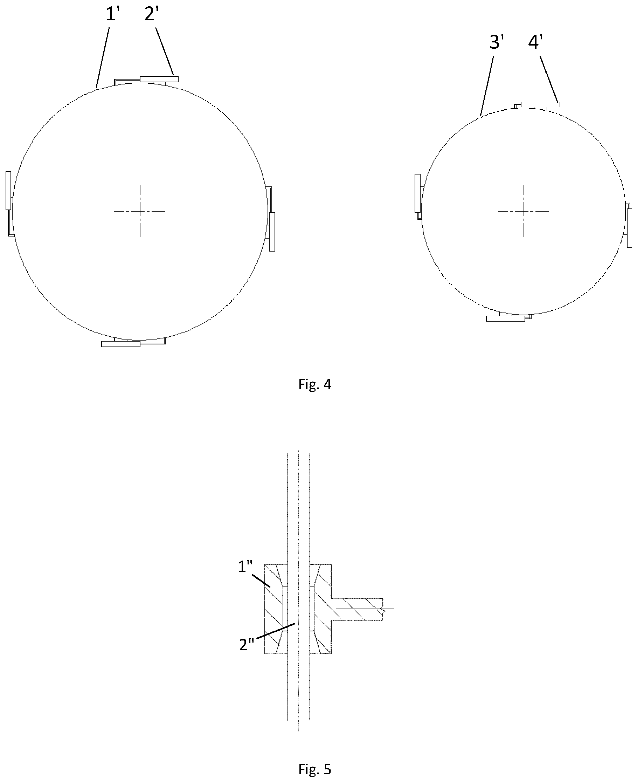

The gas replenishment capsule B is also equipped with clamps F of variable length, which are placed around the capsule. The clamps F can be made in the form of a belt reinforced with a cable, whose rolling on the wheel mounted on the motor shaft reduces the length of the clamp. The clamp F can also be made by placing microelectric linear actuators on the circumference of the gas replenishment capsule B as shown in Fig. 4. Initially, the clamp 1' is long, the microactuators 2' are extended. If it is necessary to reduce the length of the clamp 3', it is necessary to change the control setting of the microelectric actuators, so that the pistons of each of them are inserted into the housing of the microelectric actuators 4'. By reducing the circumference/length of the clamp, it is possible to reduce the volume of the chamber of the gas replenishment capsule B, which leads to a reduction in the volume of gas in the chamber and an increase in gas pressure in the capsule.

The gas replenishment capsule B is constructed in the form of a tank made of a flexible and stretchable coating, in which the plug-type end of the docking connector type D (or socket type C) connected with the socket-type end of the docking connector type C (or socket type D) embedded in the helium kite and forming a filling/emptying valve and a guiding element in the form of ropes G after connection. The capsule can also be equipped with a shock absorber E, which can be built as a pneumatic damper (PL214845), a screw-type shock absorber (PAT.229926), rotary screw-type shock absorber (PL230102) or a soft-drop absorber (PL419285). Such a configuration of the device, together with the way it operates, enables a "zero-energetic" supply of the gas to an air vehicle (kite, aerostat). It is done in the following way:

At the start level, the capsule B flexible tank is filled to the initial pressure $p_0$ and its value before filling the capsule tank is selected in such a way as to ensure proper operation of the capsule. The forces generated in the flexible coating during stretching result from the difference between the initial pressure $p_0$ and atmospheric pressure $p_{atm}$. With a known value of the material parameters of the coating making it possible to determine the pressure expansion coefficient k, by maintaining an appropriate pressure difference value, it is possible to obtain the desired initial value of the capsule tank volume $V_0$. The relationship between the initial pressure and the volume of the capsule tank is described by the relationship:

$$V_0 = V_{nom} + k(p_0 - p_{atm})$$

where $V_{nom}$ is the nominal volume of the capsule tank at pressure $p_0 = p_{atm}$, when the coating is not stretched.

The volume $V_0$ is selected so that the capsule at the target altitude of the helium kite connection has a positive climbing force calculated as the difference in weight, buoyancy and aerodynamic resistance, and that after the distance between the take-off and target level it reached the assumed coupling speed $\vartheta_{sprz}$ is achieved. This speed is chosen so that, when the capsule is coupled to the air vehicle using the docking connector, adequate inertia forces are created to enable the coupling. The appropriate value of the coupling speed is obtained by selecting the appropriate value of the capsule volume $V_0$ and ensuring the appropriate value of the lift force.

The gas replenishment capsule B has a docking system which enables automatic switching on and off on the basis of appropriate selection of design parameters.

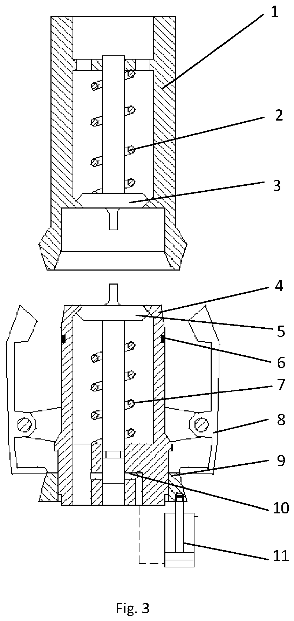

Fig. 3 shows the docking connector in the disconnected position. The docking connector consists of two types of ends: socket-type C and plug-type D. The socket-type C end is basically made up of a sleeve body 1, a closing poppet 3 and a spring 2 pressing the closing poppet 3. The pressuring spring 2, when the docking connector is disconnected, exerts pressure on the closing poppet 3 to put it against the housing, which prevents the gas flow. The plug-type D end consists of housing 4 with a diameter equal to the internal diameter of body 1 and plug end poppet 5 supported by a second spring 7. A seal 6 is embedded in the housing to seal the docking connector after connection to the socket-type end C. The plug end poppet 5 is supported by the second spring 7, which ensures that the poppet 5 is pressed against the body when the docking connector is disconnected. Plug end poppet 5 also has an undercut, which in combination with the channel made in the housing forms a slide shut-off valve 10.

If the docking connector is disconnected, both socket-type end C and plug-type end D are sealed with poppets 3 and 5 respectively. Then the undercut in plug end poppet 5 of the plug-type end D does not overlap with the channel made in the housing and there is no gas flow through the shut-off valve 10. When the ends of the docking connector are joined, in the socket type end C the closing poppet 3 is swivelled as a result of contact between the tab made on the closing poppet 3 with the tab made on plug end poppet 5. It also causes swivelling of plug end poppet 5 as well as movement of the pin of plug end poppet 5. A sufficiently large displacement of the pin of plug end poppet 5, in which the undercut is made on the circumference of the pin, causes the undercut to overlap with the channel made in the plug type D connector housing, which allows gas to flow under pressure through the shut-off valve 10 to the pneumatic actuator 11 (e.g. piston or diaphragm type). When supplied with gas under pressure, this actuator moves the piston rod out, which moves ring 9 and tightens lever 8, mounted pivotally on the housing 4. Body 1 is provided on the outside with a flange that allows lever 8 to be pressed down in order to tightly connect the ends of the docking connector.

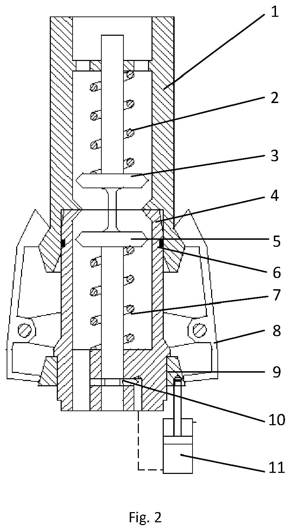

This way, the connection between the two ends of the docking connector is secured by clamping the outside of lever 8 until the pressure in chamber of the_actuator 11 drops to the desired value. The disconnection moment can be selected by maintaining a preliminary overpressure in the pre-actuator (in Fig. 2 and Fig. 3 the chamber above the piston) which, when the pressure drops to a certain value, will cause the return movement of the piston rod of pneumatic actuator 11. When ring 9 is loosened and lever 8 is released, the connector is disconnected due to spring 2 acting on the closing poppet 3 at the socket-type end C and second spring 7 acting on plug end poppet 5 at the plug-type end D. If lever 8 is not locked and is released, this will disconnect the docking connector and poppets 3 and 5 will close both ends (C and D) of the docking connector. The pneumatic actuator can be replaced by e.g. an electric linear actuator, which allows for precise determination of the moment when the docking connector is connected and disconnected. In this case the shut-off valve 10 may be used to switch on the electric actuator via a pneumo-electric transducer.

The connection of the parts of the docking connector after opening the poppets in the valves causes the flow of gas from the higher-pressure tank of the cap-

sule $p_0$ to the container of the air vehicle with a pressure close to atmospheric pressure $p_{atm}$ at the height at which the air vehicle is located. The stresses in the flexible shell of the capsule tank as a result of its emptying will also cause the volume of the capsule tank to decrease to the value of $V_k$. This volume is determined in such a way that when a given mass of gas flows out of the capsule, the capsule has zero buoyancy or the buoyancy is slightly less than zero.

In a preferable embodiment, a compressor can be used to increase the speed of gas flow between the tanks of the capsule and the air vehicle, allowing the gas to be pumped even at higher pressure than atmospheric in the tank of the air vehicle.

In another preferable embodiment, clamps with a variable circumferential length can be used to increase the speed of gas flow between the tanks of the capsule and the air vehicle, making it possible to increase the pressure of the pumped gas and make it higher than the pressure in the tank of the air vehicle. An increase in the differential pressure also leads to an increase in the gas flow velocity through the valve of the docking connector. After the pressures in the tanks of the capsule and the air vehicle have been equalized, the valve in the docking connector closes slowly and, at the final stage of the gas flow, the docking connector disconnects due to the release of the latches. The release of the latches is done by selecting the appropriate active surfaces of the docking connector valve, which are affected by the pressure inside the capsule tank and the air vehicle pressure.

By ensuring an adequate coupling speed $\vartheta_{sprz}$, it is also possible to compress the recoil springs in the docking unit. When the latches are released, the spring pushes the capsule away from the air vehicle. With zero or negative capsule buoyancy, this results in a constant speed of descent of the capsule. The end volume $V_k$ of the capsule and the force of the recoil spring are selected so that the capsule has a touchdown speed of no more than $\vartheta_{przyziem}$ after reaching the start level. A suitably low touchdown speed is ensured by a suitably selected final volume of the gas replenishment capsule.

Thanks to the sealing of the connector, the gas under higher pressure in capsule B begins to flow through the docking connector to the airship tank. The volume of gas pumped from the gas replenishment capsule to the aerostat depends on the proper selection of the initial volume of the gas tank of the capsule and the overpressure in the tank of the capsule, which can be additionally changed by clamping the F clamps. Additionally, the proper selection of the initial volume of the gas tank of the capsule affects the docking speed and the final volume affects the falling descending speed.

**Claims**

1. A tethered helium kite gas replenishment device including a multi-purpose gas replenishment capsule (B) equipped with a clamp (F), a guiding element and a shock-absorbing device (E), **characterized in that** the capsule (B) is mobile; the tethered helium kite gas replenishment device further comprises a docking connector consisting of a socket-type end (C) adapted to be mounted on a kite (A) and a plug-type end (D) mounted on the capsule (B) or vice versa, and the plug-type end (D) comprises an actuator (11) for moving a wedge ring (9); whereas the socket-type end (C) is made up of a body (1), a closing poppet (3) and a pressure spring (2), while the plug-type end (D) is equipped with the wedge ring (9) and consists of a housing (4) equipped with a pivotally mounted lever (8), configured to press against the housing (4) by a movement of the wedge ring (9), and a plug end poppet (5) supported by a second spring (7), wherein the plug end poppet (5) has an undercut which, in combination with a channel made in the plug end housing (4), forms a sliding shut-off valve (10) controlling a gas supply to the actuator (11).

2. The device according to claim 1, **characterised in that** the actuator (11) is a pneumatic actuator or a linear actuator with an electric drive powered from a battery configured to be mounted in the gas replenishment capsule (B) or the kite (A).

3. Method of replenishing gas losses in a tethered helium kite by means of a tethered helium kite replenishment device according to claim 1, where the plug end poppet (5) contains a pin having the undercut of the plug end poppet (5) on its circumference, and comprising the step of providing the tethered helium kite replenishment device such that when the capsule (B) is docked, the socket-type end (C) mounted on the kite (A) and the plug-type end (D) mounted on the capsule (B) or vice versa are connected; which causes the closing poppet (3) to move together with the pressuring spring (2) into the socket-type end (C) body (1) and a movement of the plug end poppet (5) together with the second spring (7) into the housing (4) of the plug-type end (D), which in turn causes a deflection and compression of the pressure springs (2) and the second spring (7) in their respective ends, accompanied by a movement of the pin of the plug end poppet (5), which causes the undercut of the plug end poppet pin to overlap with the channel of the housing (4) of the plug-type end (D) and allows gas to flow under pressure through the shut-off valve (10) to the actuator (11) comprising a chamber and a piston rod, and consequently a movement of the wedge ring (9) of the plug-type end (D), which in turn causes the lever (8) mounted pivotally on the housing (4) to press against the socket-type end (C) body (1);

when supplied with gas under pressure the actuator (11) moves the piston rod out, which moves the wedge ring (9) and tightens the lever (8), mounted pivotally on the housing (4);

when the pressure in the chamber of the actuator (11) drops to a desired value, the piston rod of the actuator (11) is returned until the plug-type end lever (8) is loosened, which causes the connector to disconnect due to the action of the previously compressed spring (2) of the socket-type end (C) and the second spring (7) of the plug-type end (D), whereas when disconnecting, the socket-type end (C) closing poppet (3) and the plug-type end (D) plug end poppet (5) close both ends of the docking connector tightly.

4. The method of claim 4, **characterized in that** the plug-type end (D) after connecting with the socket-type end (C) is sealed with a seal (6) embedded in the housing (4).

5. The method of claim 4, **characterized in that** a kite's tank volume change and a pressure change in the tank of the gas replenishment capsule (B) are caused by changing a length of the clamp (F), the length being variable and adjustable located on a circumference of the capsule (B).

**Revendications**

1. Dispositif de réapprovisionnement en gaz des cerfs-volants captifs à hélium au moyen d'une capsule multifonctionnelle de réapprovisionnement en gaz (B) équipée d'un collier de serrage (F), d'un élément de guidage et d'un dispositif d'absorption des chocs (E), **caractérisé en ce que** la capsule (B) est mobile ; le dispositif de réapprovisionnement en gaz des cerfs-volants captifs à hélium comprend en outre un connecteur d'amarrage constitué d'une extrémité de type douille (C) adaptée pour être installée sur un cerf-volant (A) et d'une extrémité de type fiche (D) installée sur la capsule (B) ou vice versa, et l'extrémité de type fiche (D) comprend un actionneur (11) pour déplacer un anneau de calage (9) ; tandis que l'extrémité de type douille (C) est constituée d'un corps (1), d'un clapet de fermeture (3) et d'un ressort de pression (2), l'extrémité de type fiche (D) est équipée de l'anneau de calage (9) et est constituée d'un boîtier (4) équipé d'un levier monté de manière pivotante (8), configuré pour appuyer contre le boîtier (4) par un mouvement de l'anneau de calage (9), et d'un clapet (5) de l'extrémité de type fiche supporté par un second ressort (7), ce clapet de l'extrémité de type fiche (5) ayant une contre-dépouille qui, en combinaison avec un canal réalisé dans le boîtier de l'extrémité de type fiche (4), forme une vanne d'arrêt coulissante (10) contrôlant l'arrivée de gaz vers l'actionneur (11).

**2.** Dispositif selon la revendication 1, **caractérisé en ce que** l'actionneur (11) est un actionneur pneumatique ou un actionneur linéaire avec un entraînement électrique alimenté par une batterie configuré pour être installé sur la capsule de réapprovisionnement en gaz (B) ou le cerf-volant (A).

**3.** Procédé de réapprovisionnement des pertes de gaz dans un cerf-volant captif à hélium au moyen d'un dispositif de réapprovisionnement en gaz des cerfs-volants captifs à hélium selon la revendication 1, où le clapet de l'extrémité de type fiche (5) contient une broche ayant la contre-dépouille du clapet de l'extrémité de type fiche (5) sur sa circonférence, et comprenant l'étape consistant à fournir le dispositif de réapprovisionnement en gaz des cerfs-volants captifs à hélium de telle sorte que lorsque la capsule (B) est amarrée, l'extrémité de type douille (C) montée sur le cerf-volant (A) et l'extrémité de type fiche (D) montée sur la capsule (B) ou vice versa sont connectées; ce qui provoque un déplacement du clapet de fermeture (3) avec le ressort de pression (2) dans le corps (1) de l'extrémité de type douille (C) et un déplacement du clapet de l'extrémité de type fiche (5) avec le second ressort (7) dans le boîtier (4) de l'extrémité de type fiche (D), ce qui provoque à son tour une déviation et une compression des ressorts de pression (2) et du second ressort (7) dans leurs extrémités respectives, accompagné d'un mouvement de la broche du clapet de l'extrémité de type fiche (5), ce qui amène la contre-dépouille de la broche du clapet de l'extrémité de type fiche à chevaucher le canal du boîtier (4) de l'extrémité de type fiche (D) et permet au gaz de s'écouler sous pression à travers la vanne d'arrêt (10) vers l'actionneur (11) comprenant une chambre et une tige de piston et par conséquent un mouvement de l'anneau de calage (9) de l'extrémité de type fiche (D), qui à son tour amène le levier (8) monté de manière pivotante sur le boîtier (4) à appuyer contre le corps (1) de l'extrémité de type douille (C) ;

lorsqu'il est alimenté en gaz sous pression, l'actionneur (11) fait sortir la tige de piston, ce qui déplace l'anneau de calage (9) et serre le levier (8), monté de manière pivotante sur le boîtier (4) ;
lorsque la pression dans la chambre de l'actionneur (11) baisse jusqu'à une valeur souhaitée, la tige de piston de l'actionneur (11) est rappelée jusqu'à ce que le levier (8) de l'extrémité de type fiche soit desserré, ce qui provoque la déconnexion du connecteur en raison de l'action du ressort (2) précédemment comprimé de l'extrémité de type douille (C) et du second ressort (7) de l'extrémité de type fiche (D), tandis qu'au moment de la déconnexion, le clapet de fermeture (3) de l'extrémité de type douille (C) et le clapet (5) de l'extrémité de type fiche (D) ferment hermétiquement les deux extrémités du connecteur d'amarrage.

**4.** Procédé de la revendication 4, **caractérisé en ce que** l'extrémité de type fiche (D) après sa connexion à l'extrémité de type douille (C) est scellée avec un joint (6) encastré dans le boîtier (4).

**5.** Procédé de la revendication 4, **caractérisé en ce qu'**un changement de volume du réservoir du cerf-volant et un changement de pression dans le réservoir de la capsule de réapprovisionnement en gaz (B) sont provoqués par une modification de la longueur du collier de serrage (F), la longueur étant variable et réglable sur la circonférence de la capsule (B).

**Patentansprüche**

**1.** Eine Gasnachfüllvorrichtung mit einer Mehrzweck-Gasnachfüllkapsel (B) für einen angeleinten Heliumdrachen, ausgestattet mit einer Klemme (F), einem Führungselement und einem Stoßdämpfer (E), **dadurch gekennzeichnet, dass** die Kapsel (B) beweglich ist; die Gasnachfüllvorrichtung für einen angeleinten Heliumdrachen umfasst weiterhin einen Docking-Anschluss bestehend aus einem buchsenartigen Ende (C) für die Montage an einem Drachen (A) und einem an der Kapsel (B) montierten steckerartigen Ende (D) oder umgekehrt, und das steckerartige Ende (D) hat einen Aktuator (11) zum Bewegen des Keilrings (9); wobei das buchsenartige Ende (C) aus einem Körper (1), einem Schließkegel (3) und einer Druckfeder besteht (2), wobei das steckerartige Ende (D) mit einem Keilring ausgestattet ist (9) und aus einem Gehäuse (4), das mit einem schwenkbar gelagerten Hebel ausgestattet ist (8), um durch eine Bewegung des Keilrings (9) gegen das Gehäuse (4) zu drücken, und einem durch eine zweite Feder (7) unterstütztem Ventilkegel (5) des steckerartigen Endes besteht, wobei der Ventilkegel des steckerartigen Endes (5) eine Hinterschneidung hat, die in Kombination mit einem Kanal im Steckergehäuse (4), ein Absperrschiebeventil bildet (10), welches die Gaszufuhr zum Aktuator (11) steuert.

**2.** Vorrichtung nach Anspruch 1, **dadurch gekennzeichnet, dass** der Aktuator (11) ein pneumatischer Aktuator oder ein linearer Aktuator mit einem elektrischen Antrieb ist, der von einer Batterie gespeist wird, konfiguriert, um an der Gasnachfüllkapsel (B) oder an dem Drachen (A) montiert zu werden.

**3.** Verfahren zum Nachfüllen von Gasverlusten in einem angeleinten Heliumdrachen mittels einer Nachfüllvorrichtung für angeleinte Heliumdrachen nach Anspruch 1, wobei der Ventilkegel des steckerartigen Endes (5) einen Stift enthält, der an seinem Umfang die Hinterschneidung des Ventilkegels des steckerartigen Endes aufweist (5), umfassend den Schritt des Bereitstellens der Nachfüllvorrichtung für einen angeleinten Heliumdrachen, so dass, wenn die Kapsel (B) angedockt ist, das buchsenartige Ende (C), das am Drachen (A) angebracht ist, und das steckerartige Ende (D), das an der Kapsel (B) angebracht ist, oder umgekehrt, verbunden sind; was bewirkt, dass sich der Verschlusskegel (3) zusammen mit der Druckfeder (2) in den Körper des buchsenartigen Endes (C) bewegt (1) und eine Bewegung des Ventilkegels des steckerartigen Endes (5) zusammen mit der zweiten Feder (7) in das Gehäuse (4) des steckerartigen Endes (D), was wiederum eine Auslenkung und Kompression der Druckfedern (2) und der zweiten Feder (7) an ihren jeweiligen Enden bewirkt, begleitet von einer Bewegung des Stifts des Ventilkegels des steckerartigen Endes (5), was dazu führt, dass sich die Hinterschneidung des Ventilkegels des steckerartigen Endes mit dem Kanal des Gehäuses (4) des steckerartigen Endes überlappt (D) und ermöglicht, dass Gas unter Druck durch das Absperrventil (10) zum Aktuator (11) strömt, umfassend eine Kammer und eine Kolbenstange, und folglich eine Bewegung des Keilrings (9) des steckerartigen Endes (D) erlaubt, was wiederum bewirkt, dass der schwenkbar am Gehäuse (4) angebrachte Hebel (8) gegen den Körper (1) des steckerartigen Endes (C) drückt;

wenn unter Druck stehendes Gas zugeführt wird, bewegt der Aktuator (11) die Kolbenstange heraus, was den Keilring (9) bewegt und den Hebel (8) festzieht, der schwenkbar am Gehäuse (4) angebracht ist;
wenn der Druck in der Kammer des Aktuators (11) auf einen gewünschten Wert sinkt, wird die Kolbenstange des Aktuators (11) bis zum Lösen des Hebels (8) des steckerartigen Endes zurückgeführt, so dass die Verbindung durch die Wirkung der zuvor zusammengedrückten Feder (2) des buchsenartigen Endes (C) und der zweiten Feder (7) des steckerartigen Endes (D) getrennt wird, während beim Trennen der Verschlusskegel (3) des buchsenartigen Endes (C) und der Verschlusskegel (5) des steckerartigen Endes (D) beide Enden der Andockverbindung dicht verschließen.

4. Verfahren nach Anspruch 4, **dadurch gekennzeichnet, dass** das steckerartige Ende (D) nach der Verbindung mit dem buchsenartigen Ende (C) mit einer in das Gehäuse (4) eingebetteten Dichtung (6) abgedichtet wird.

5. Verfahren nach Anspruch 4, **dadurch gekenn-**

**zeichnet, dass** eine Änderung des Tankvolumens des Drachens und eine Druckänderung im Tank der Gasnachfüllkapsel (B) durch eine Änderung der Länge der Klemme (F) verursacht werden, wobei die Länge variabel und einstellbar ist und sich an einem Umfang der Kapsel (B) befindet.

Fig. 1

A

C

D

B

E

F

G

Fig. 2

Fig. 3

1'　2'

3'　4'

Fig. 4

1"

2"

Fig. 5

**EP 3 696 080 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017203827 A

- US 2012312919 A